# EUROPÄISCHE PATENTSCHRIFT

(11) **EP 0 501 911 B1**
(45) Veröffentlichungstag und Bekanntmachung des Hinweises auf die Patenterteilung: **23.08.1995**
(21) Anmeldenummer: 92810110.4
(22) Anmeldetag: 18.02.1992
(51) Int. Cl.: A01G 3/033

(54) **Schneidegerät für Reben und Sträucher**
Cutting apparatus for vines and shrubs
Appareil à couper pour les vignes et les arbustes

(30) Priorität: 27.02.1991 CH 582/91
(43) Veröffentlichungstag der Anmeldung: 02.09.1992
(73) Patentinhaber: Meyer, Casper, CH-8500 Frauenfeld (CH)
(72) Erfinder: Meyer, Casper, CH-8500 Frauenfeld (CH)

(56) Entgegenhaltungen:
- FR-A- 1 034 036

## Beschreibung

Die Erfindung betrifft ein Rebschneidegerät mit einer Schneidvorrichtung und einem Antrieb dafür gemäss dem Oberbegriff des unabhängigen Patentanspruches.

Die Reben werden auch heute noch meist mit bekannten Rebscheren von Hand geschnitten, um jeden Trieb genau am richtigen Ort beschneiden zu können. Dies ist notwendig, dass der Rebstock optimal wachsen kann und das Verhältnis von Wachstum, Belaubung und Ertrag günstig ist.

Aus DE 32 16 912 ist ein Rebschneidegerät bekannt, welches ein Handgerät mit einem langen sägeähnlichen Messer, welches hin und her bewegt wird, in der Art der allgemein bekannten Heckenscheren aufweist. Da dieses Handgerät relativ schwer ist, ist es an einem Bügel aufgehängt, welcher an einem Rucksackähnlichen Traggestell befestigt ist. Der Winzer trägt diesen Rucksack, der Druckluftflaschen oder Batterien enthält, auf dem Rücken. Dabei führt der Bügel vom Rucksack nach oben und über den Kopf nach vorne in den Armbereich. In diesem Bereich hängt das Handgerät, welches den Elektro oder Luftmotor enthält. Somit muss der Winzer das Gewicht des Rebschneidegerätes während der Arbeit nicht mit seinen Händen und Armen trage und kann sich auf die Schneidearbeit konzentrieren. Nachteile dieser heckenscherenartigen Schneidegeräte sind einerseits das relativ grosse Gewicht und die Unhandlichkeit durch die Länge des sägeähnlichen Messers. Andererseits ist ein gezieltes Schneiden der einzelnen Triebe eines Rebstockes mit dieser Art Messer nicht möglich. Zusätzlich ist die ganze Einheit mitsamt dem Bügel und dem Gestell auch als ganzes unhandlich. Beim Bücken um niedere Triebe zu schneiden kann der Bügel mit der Spanndrähten für die Aufhängung der Triebe und mit den Rebstöcken selbst in Berührung kommen.

Aus FR 1 034 036 (Taubé, M.G.) ist eine angetriebene Rebschere bekannt, welche eine angetriebene rotierende Scheibe als Messer aufweist, welche gegen eine feststehendes gezahntes Gegenmesser arbeitet. Das rotierende Messer ist fräsblattähnlich gezahnt. Das Gegenmesser weit eine etwas gegen die rotierende Scheibe gebogene Klinge auf und ist ebenfalls gezahnt. Der Antrieb des rotierenden Messers erfolgt über eine flexible Welle.

Aufgabe der Erfindung ist es ein angetriebenes Schneidegerät für Reben zu schaffen, welches mit klein und handlich und mit herkömmlichen Batterien ohne separate Akkummulatortasche betrieben werden kann. Dabei sollen einzelne Triebe individuell und gezielt am richtigen Ort geschnitten werden können, wie es mit einer gewöhnlichen Rebschere von Hand gemacht wird. Der Schneidvorgang selbst soll schnell, präzise sein und einen einwandfreien Schnitt ergeben.

Diese Aufgabe wird durch die in den Patentanspüchen angegebene Erfindung gelöst und wird nachstehen im Zusammenhang mit den Zeichnungen näher beschrieben.

Vorteil der Erfindung ist, dass durch die erfindungsgemässe Schneidvorrichtung ein Antrieb mit wenig Leistungsaufnahme verwendet werden kann, so dass relativ kleine Energiequellen , wie gewöhnliche klein Batterien oder Akkumulatoren verwendet werden und im Schneidegerät selbst angeordnet werden können.

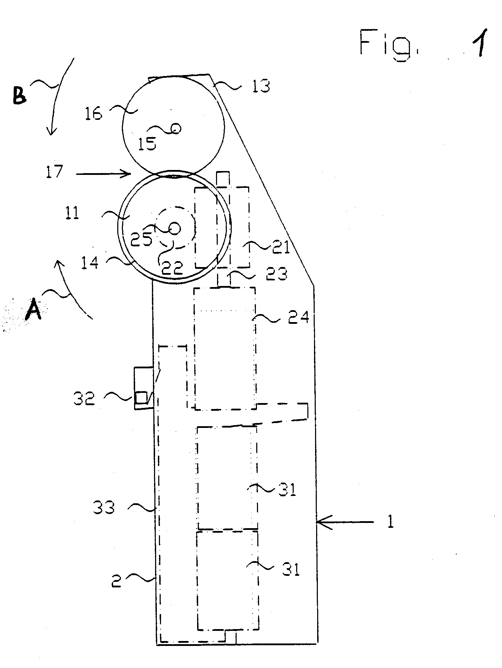

Figur 1 zeigt eine erfindungsgemässes Rebschneidegerät mit zwei rotierenden Klingen.

In Figur 1 ist ein erfindungsgemässes Rebschneidegerät in schematischer Seitenansicht dargestellt. Das Gerät weist ein Gehäuse 1 auf, welches im unteren Teil als Handgriff 2 ausgestaltet ist. Auf der einen Seite des Handgriffes ist ein Schaltknopf 32 derart angebracht, dass er in natürlicher Haltung mit einem Finger durch drücken betätigt werden kann. Am oberen Ende des Handgriffes 2 ist der Schneidmechanismus 10 angebracht. Er besteht aus einer kreisscheibenförmigen Klinge 11, welche um eine Achse 25 drehbar gelagert ist. Die kreisförmige Klinge 11 hat auf ihrem Umfange eine geschliffene Schneide 14. Diese Schneide 14 ist flach, wellenartig oder gezahnt geschliffen. Oberhalb der kreisförmigen Klinge 11 ist eine zweite rotierende kreisscheibenförmige Messerklinge 16 an einer Achse 15 drehbar gelagert angebracht. Die beiden kreischeibenförmigen Messerklingen 11 und 16 überschneiden sich an ihrem Umfange teilweise, da sie seitlich mit minimalen Spiel scherenartig gegeneinander versetzt sind und der Abstand zwischen der Achse 25 der ersten Klinge 11 und der Achse 15 der zweiten Klinge 16 kleiner etwas kleiner ist als die Summe der Radien der ersten Klinge 11 und der zweiten Klinge 16 . Somit bilden die beiden kreisscheibenförmigen Klingen 11 und 16 einen Schneidspalt 17, welcher einwärts einen spitzen Winkel 18 bildet.

Im Gehäuse 1, im Bereich des Handgriffes sind Batterien oder Akkumulatoren als Energiequelle 31 herausnehmbar angeordnet. Gegen den Schneidmechanismus 10 befindet sich ein Elektromotor 24, welcher mittels seiner Welle 23 ein Zahnradgetriebe 21, 22 antreibt. Ein Zahnrad 22 befindet sich auf der Achse 25 und ist in fester Verbindung mit der rotierenden Klinge 11, welche dadurch in Rotation versetzt werden kann. Ein Stromkreis 33 mit eingeschaltetem Schalter 32 bildet die schaltbare elektrische Verbindung von Energiequellen 31 und Motor 24.

Die erste kreisscheibenförmige Klinge 11 wird derart angetrieben, dass die Rotationsbewegung in Drehrichtung A gegen die zweite kreisscheibenförmige Messerklinge 16 erfolgt. Durch diese Rotationsbewegung wird ein Rebzweig in den Schneidspalt 17 hineingezogen und gegen die zweite kreisscheibenförmige Messerklinge 16 gepresst, wobei die zweite Klinge 16 durch die Bewegung des Rebzweiges ebenfalls in eine Drehung versetzt wird.

Dabei gerät der Rebzweig noch weiter in den Schneidspalt 17 und wird durch die beiden Klingen 11 und 16 entzweigeschnitten.

In einer weiteren Ausführungsform der gleichen Art wird die zweite kreisscheibenförmige Klinge 16 in gleicher ebenfalls durch den Motor 24 angetrieben, wobei allerdings ihre Drehrichtung B gegensinnig zur Drehrichtung A der ersten kreisscheibenförmigen Klinge 11 erfolgt.

An Stelle des elektrischen Antriebes kann auch ein hydraulischer Antrieb verwendet werden. Dabei wird an Stelle der Batterien eine Druckflaschen eingesetzt und ein Hydromotor zum Antrieb verwendet.

## Patentansprüche

1. Rebschneidegerät mit einer Schneidvorrichtung und einem Antrieb dafür, wobei die Schneidvorrichtung eine erste angetriebene rotierende kreisscheibenförmigen Messerklinge (11) aufweist, dadurch gekennzeichnet, dass es eine zweite rotierende kreisscheibenförmige Messerklinge (16) umfasst, wobei mindestens eine dieser Messerklingen (11,16) am Umfang eine Schneide (14) aufweist.

2. Rebschneidegerät nach Anspruch 1, dadurch gekennzeichnet, dass die zweite rotierende Messerklinge (16) so angetrieben ist, dass ihre Drehrichtung (B) gegensinnig zur Drehrichtung (A) der ersten rotierenden Messerklinge (11) ist.

## Claims

1. Cutting apparatus for vines and shrubs with a cutting device with a drive, wherein the cutting device comprises a first driven rotation disc knife (11), characterised in that the cutting device comprises a second rotation disc knife (16), an that at least one of the knifes (11,16) has a cutting edge on his circumference.

2. Cutting apparatus according to claim 1, characterised in that the second rotation disc knife (16) is driven in a way that its direction of rotation is opposite the direction of rotation of the first rotation disc knife (11).

## Revendications

1. Appareil à couper pur les vignes et les arbustes avec un dispositif tranchant et un entraînement et que le dispositif tranchant comprend un premier couteaux (11) d'un disque rotatif entraîné caractérisé en ce qu'il comprend une deuxième couteau (16) d'un disque rotatif et que l'un des couteaux (11,16) au moins est formé d'une lame de coupe sur la périphérie.

2. Appareil à couper selon revendication 1, caractérisé en ce que la deuxième couteau rotatif est entraîné tellement que son sens de rotation (B) est au contraire du sens de rotation (A) du premier couteau rotatif.
